# FASCICULE DE BREVET EUROPEEN

(11) **EP 4 092 509 B1**
(45) Date de publication et mention de la délivrance du brevet: **29.03.2023**
(21) Numéro de dépôt: 22173415.5
(22) Date de dépôt: 16.05.2022
(51) Int. Cl.: G06F 3/033, G06F 3/0354, G06F 3/039, B60K 37/06, B64D 43/00, B60K 35/00, B60K 37/04

(54) **SYSTÈME D'INTERACTION À DISTANCE AVEC UN MOYEN DE POINTAGE D'UN SYSTÈME DE VISUALISATION DE COCKPIT D'AÉRONEF**
SYSTEM ZUR FERNINTERAKTION MIT ZEIGEMITTELN VON EINEM ANZEIGESYSTEM EINES FLUGZEUGCOCKPITS
SYSTEM FOR REMOTELY INTERACTING WITH POINTING MEANS OF A DISPLAY SYSTEM OF AN AIRCRAFT'S COCKPIT

(30) Priorité: 17.05.2021 FR 2105110
(43) Date de publication de la demande: 23.11.2022
(73) Titulaire: THALES, 92400 Courbevoie (FR)
(72) Inventeur: BESNARD, Mathieu, 33700 Merignac (FR); CONI, Philippe, 33700 Merignac (FR); EGEA, Sarah, 33700 Merignac (FR); LE ROUX, Yannick, 33700 Mérignac (FR)
(74) Mandataire: Atout PI Laplace

(56) Documents cités:
- EP-A2- 2 808 763
- WO-A1-2021/005166
- US-A1- 2014 062 884
- US-B1- 10 732 774

## Description

L'invention porte sur un système d'interaction à distance avec un moyen de pointage d'un système de visualisation de cockpit d'aéronef comprenant des IHM.

L'invention concerne, de façon générale, la manière d'interagir sur un système de cockpit constitué d'un dispositif d'affichage comportant un grand écran unique ou une pluralité d'écrans disposés essentiellement en planche de bord.

Une interface entre le pilote et le système d'un cockpit d'aéronef est essentiellement constituée d'écrans multifonctions et d'organes de commandes.

Historiquement, les organes de commande étaient séparés des écrans principaux, sous forme de panneaux de contrôle munis de divers interacteurs physiques, comme des Interrupteurs, des sélecteurs rotatifs, ou des touches.

Par la suite, ces organes de commande ont été en partie intégrés aux visualisations, sous la forme de touches de fonction situées tout autour de l'écran, éventuellement complétés par un ou plusieurs rotacteurs.

Toutefois, l'expérience interactive demeure frustrante si on la compare au monde de la micro-informatique, basée sur l'utilisation de fenêtres, menu, icones activables au moyen d'un pointeur.

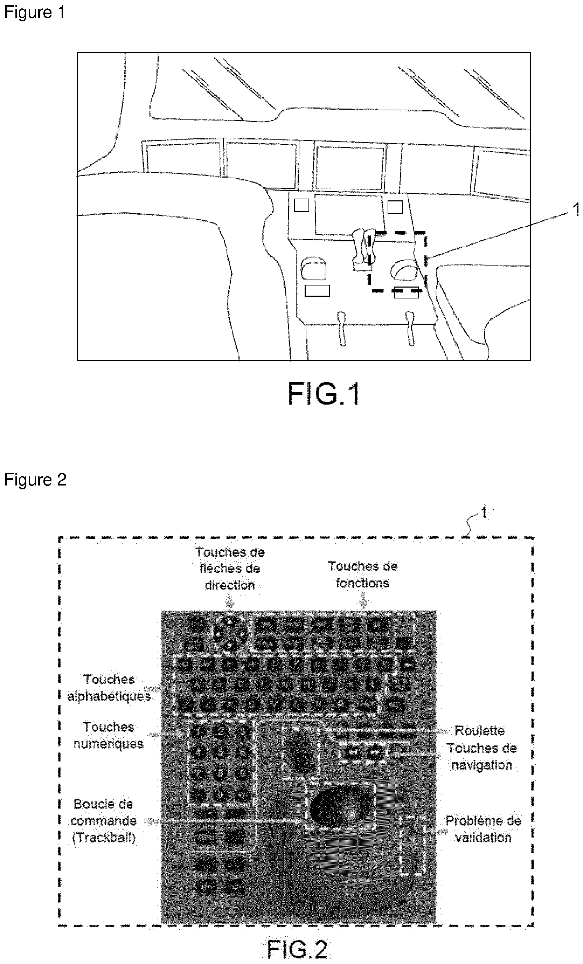

Comme illustré sur les [Fig.1] et [Fig.2], la génération de cockpit actuelle a donc vu l'introduction d'un dispositif d'interaction avec un moyen de pointage fonctionnellement identique à une souris, appelé CCD, pour acronyme de "Control Cursor Display" en langue anglaise, à base de boule de pointage, ou trackball en langue anglaise, et permettant d'interagir directement sur les écrans du cockpit. Un tel dispositif se révèle peu pratique à l'usage, le déplacement d'un pointeur par une trackball étant moins naturel et efficient qu'avec une souris.

Un tel dispositif 1 est représenté en [Fig.1] dans le cockpit, et de manière plus détaillée en [Fig.2].

L'expérience utilisateur d'un tel dispositif dit WIMP pour acronyme de "Windows, Icons, Menus and Pointer" en langue anglaise car basé sur une interface graphique composée de fenêtres ("Windows" en langue anglaise), icones ("Icons" en langue anglaise), menus ("Menus" en langue anglaise) activables au moyen d'un pointeur ("Pointer" en langue anglaise).

A l'usage, un tel dispositif reste frustrant comparé aux tablettes et smartphones basés sur une interaction tactile directe sur l'écran.

Récemment, les cockpits d'avions civils se sont vus équipés d'écrans tactiles, ce qui permet une interaction directe et intuitive du pilote et/ou du copilote avec les écrans.

Néanmoins, dans le cadre d'un cockpit constitué de grands écrans, voire d'un écran unique, il n'est pas possible d'avoir toute la surface d'affichage à portée de main, et encore moins à une distance compatible avec des gestes tactiles.

De plus, ces écrans tactiles sont difficilement utilisables en cas de présence de vibrations, ou lorsque le pilote recule son siège en position de vol de croisière.

Le document EP2808763-A2 décrit une interface homme-machine d'un véhicule, par exemple pour un cockpit d'aéronef, munie d'un moyen de désignation pour contrôler un curseur sur un écran de visualisation qui peut être un écran tactile. Le moyen de désignation peut comporter une zone tactile et un bouton. L'interface comporte un socle et un support s'étendant en élévation à partir dudit socle. Une face supérieure du support comprend un repose-bras ergonomique. L'écran de visualisation peut être placé dans le prolongement de l'axe de symétrie longitudinal du repose-bras. Une face avant du support s'étend en élévation à partir du socle d'une portion inférieure sur laquelle est agencé le moyen de désignation vers une portion supérieure bombée pour supporter une paume d'un utilisateur. Le moyen de désignation est relié à un dispositif électronique pour générer un signal de contrôle à destination de l'écran de visualisation, le dispositif électronique pouvant être agencé au sein du socle. Le support peut par exemple être pivotant pour permettre l'accès au dispositif électronique.

Un but de l'invention, i.e. d'un CCD Post WIMP, est de fournir au pilote et/ou copilote un média permettant d'interagir à distance avec les IHM du cockpit, de façon ergonomique et efficace.

Les CCD actuels, sont conçus en tant que média d'interaction WIMP, c'est-à-dire au moyen d'un pointeur qui interagit avec des icônes, des menus, des fenêtres. Le déplacement du pointeur sur un écran du cockpit s'effectue à l'aide d'une trackball ou joystick, et les actions se font au moyen de touches dédiées. Il n'est pas possible d'interagir avec un système conçu post-WIMP sans entraîner une mauvaise expérience utilisateur, et il n'existe pas, à l'heure actuelle, d'interface post-WIMP native pour un CCD à usage avionique.

Le seul produit connu est le "Précision touchpad" de Microsoft^{®}, qui permet effectivement une interaction multipoint ou multicontact pour "multitouch" en langue anglaise, et cette technologie est très vraisemblablement évaluée par les équipementiers automobiles. Cependant, leur mise en oeuvre représente encore une barrière technologique pour un usage critique, surtout pour le domaine aéronautique, du point de vue de la sécurisation des interactions, l'usage en ambiance vibratoire et turbulente, la tenue en environnement électromagnétique sévère, et la complexité du contrôleur capacitif (mise en oeuvre, tuning ou réglage pour déterminer les valeurs optimales des paramètres et de maintenir la meilleure sensibilité possible au toucher quelles que soient les perturbations qui peuvent se produire dans l'environnement, bruit de lecture pour une mesure de la classe du femto-farad, niveau d'assurance de conception, couche d'accès aux données d'acronyme DAL pour "Data Access Layer" en langue anglaise).

Pour toutes ces raisons, on ne trouve pas sur le marché avionique de produit satisfaisant, pour un CCD Post-WIMP.

Un autre but de l'invention est de pouvoir être utilisé par le pilote en cas de turbulence quand l'usage des écrans tactiles est difficile (voir impossible) et/ou moins performant).

Un autre but de l'invention est de pouvoir être utilisé confortablement par le pilote ou le co-pilote dans toutes les positions, même en position de siège reculé. La position avancée (proches des IHM du cockpit) est utilisée lors des phases critiques (décollage et atterrissage) alors que la position reculée est utilisée en phase de croisière (synonyme de confort d'assise). Dans cette dernière position, l'intérêt du CCD Post WIMP prend tout son sens car il fournit à l'utilisateur un média permettant d'interagir à distance avec les IHM du cockpit de façon confortable (sans tendre le bras sur les IHM).

Un autre but de l'invention est de pouvoir être complété par un clavier de saisie par exemple en alpha numérique.

Deux CCD Post WIMP sont prévus d'être installés dans le cockpit, 1 par pilote. Il est demandé que le même produit (unique Part Number) puisse être installé pour chaque pilote. Le CCD doit donc être conçu pour être ambidextre. La fonction ambidextre pourrait être utile dans des petits cockpits dans lesquels il n'y aurait qu'un seul CCD Post WIMP entre les deux utilisateurs potentiels.

Un autre but de l'invention est d'être le plus compact possible dans le cockpit.

Un autre but de l'invention est d'avoir une intégration harmonieuse, d'assurer un nettoyage facile, et de démontrer une utilisation intuitive.

Un autre but de l'invention est d'être adaptable à la plupart des cockpits, et d'être ajustable par l'utilisateur de telle sorte que son usage soit ergonomique pour un utilisateur avec la main droite comme la main gauche typiquement dans les petits cockpits où il n'y a la place que pour un seul qui sera utilisé soit par le pilote ou le copilote.

Il est proposé, selon un aspect de l'invention, un système d'interaction à distance avec un moyen de pointage d'un système de visualisation de cockpit d'aéronef muni d'IHM, comprenant trois couches :
- une couche inférieure configurée pour recevoir les connexions filaires d'alimentation électrique et d'échanges de données ;
- une couche supérieure comprenant un pommeau repose main, au moins un interacteur physique configuré pour interagir sur un dispositif de pointage sur les IHM du cockpit, et un module à surface plane sensible au toucher configurée pour interagir sur le moyen de pointage sur les IHM du cockpit et disposé dans le prolongement du pommeau repose-main ; et
- une couche intermédiaire configurée pour permettre une modification du positionnement de la couche supérieure.

Un tel système avec une conception en trois couches permet de s'adapter à tous les porteurs et à différents endroits dans le cockpit (piédestal, console centrale voire dans l'accoudoir), tout en assurant une position ergonomique pour l'utilisateur. En outre, la présence d'un repose main, assurant la stabilité du pilote dans ses actions d'interaction avec le système de visualisation, et la présence d'un module à surface plane sensible au toucher configuré pour interagir sur le dispositif de pointage sur les IHM du cockpit et disposé dans le prolongement du repose-main permet à la main de l'utilisateur de faire toutes les gestes et les interactions tactiles Post WIMP de manière confortable, ergonomique, intuitive et sécurisée.

Selon un mode de réalisation, le module à surface plane sensible au toucher configuré pour interagir sur le dispositif de pointage sur les IHM du cockpit comprend un pavé tactile capacitif multi-contact, ou un écran tactile configuré pour mettre en oeuvre un clavier alpha numérique, ou une surface tactile associée à un capteur infrarouge.

Ainsi, le module à surface plane sensible au toucher est adapté en fonction du besoin du client, du type de porteur et des contraintes environnementales à supporter.

Dans un mode de réalisation, la couche supérieure a une structure en V et le pommeau repose main en V inversé, dans lequel le V a une ouverture angulaire comprise entre 65° et 250°.

Ainsi, cette combinaison de formes permet d'assurer une position ergonomique et confortable de la main avec la paume qui se repose sur le pommeau et les doigts qui tombent naturellement et intuitivement sur le module à surface plane sensible au toucher.

Une partie de la cette plage d'ouverture angulaire du V (par exemple comprise entre 65° et 180°) permet à l'utilisateur de voir le module à surface plane sensible au toucher qui peut ainsi être un écran tactile configuré pour mettre en oeuvre un clavier alpha numérique. Une autre partie de cette plage d'ouverture angulaire du V (par exemple > 180°) permet à l'utilisateur d'obtenir un système CCD avec le module à surface plane sensible au toucher ayant une disposition proche de celle d'un CCD en forme de bulbe.

Dans un mode de réalisation, le V inversé a une ouverture angulaire comprise entre 110° et 160°.

Cette plage d'ouverture angulaire du V inversé permet de couvrir les différents besoins de l'utilisateur en terme d'ergonomie du pommeau repose main. Cette plage d'ouverture angulaire permet également d'obtenir deux zones : une zone arrière correspondant à une position de repos avec la main plutôt posée à l'arrière du pommeau, et une zone avant correspondant à une position d'interaction avec la main plutôt posée à l'avant du pommeau.

Selon un mode de réalisation, le V inversé a une ouverture angulaire de 145°.

Cette ouverture angulaire permet d'obtenir une forme de pommeau universelle qui couvre le besoin d'un grand nombre d'utilisateurs.

Dans un mode de réalisation, la partie avant du pommeau repose main en V inversé est parallèle à la partie arrière de la structure en V.

Cela permet aux bouts des doigts de l'utilisateur d'être à une distance ergonomique des interacteurs physiques latéraux (boutons) et du module à surface plane sensible au toucher.

Selon un mode de réalisation, l'écart entre la surface supérieure de la partie arrière de la structure en V et la surface inférieure de la partie avant du pommeau repose main en V inversé est supérieur ou égal à 20 mm.

Ainsi, un espace libre sous le pommeau est présent pour le passage des doigts de l'utilisateur permettant d'assurer une préhension ferme en cas de turbulence. Cet espace libre est aussi une opportunité pour le placement de capteur de présence (type capacitif sous le pommeau) qui permet d'activer des fonctions supplémentaires.

Dans un mode de réalisation, la couche intermédiaire comprend une platine (i.e. une plaque qui bouche l'espace alloué dans le cockpit du porteur et qui dispose d'éléments de fixation compatible au porteur) configurée pour être adaptée à sa position d'installation dans le cockpit et à la fixation requise par l'aéronef.

Cette platine adaptable en finitions (couleur et texture équivalentes au reste du cockpit), en dimensions et en moyens de fixation permet d'offrir une gamme de produit flexible et modulaire. Donc, cette plaque adaptable permet une intégration harmonieuse du système dans le cockpit du porteur. De plus, cette platine peut être configurée selon le porteur sans changer la couche supérieure. Ainsi, cela présente un avantage industriel avec des investissements en outillage (moules) mieux maîtrisés pour les pièces de la couche supérieure.

Selon un mode de réalisation, la couche intermédiaire comprend un adaptateur de rotation, configuré pour effectuer une rotation de la couche supérieure selon un axe horizontal.

Par exemple, l'adaptateur de rotation, configuré pour effectuer une rotation de la couche supérieure selon un axe horizontal, est configuré pour s'incliner jusqu'à 45° par rapport à l'horizontale.

Dans un mode de réalisation, la couche intermédiaire comprend un adaptateur de translation, disposé sur la platine, configuré pour effectuer une translation de la couche supérieure par rapport à la couche intermédiaire.

Selon un mode de réalisation, la couche supérieure comprend un adaptateur de translation, configuré pour effectuer une translation de la couche intermédiaire par rapport à la couche inférieure.

Dans un mode de réalisation, la couche intermédiaire comprend un adaptateur de rotation, configuré pour effectuer une rotation des éléments disposés au-dessus de la platine, de manière solidaire, selon un axe horizontal.

Ces adaptateurs de rotation et de translation permettent de réaliser un réglage personnalisé de la position du système CCD en fonction de l'ergonomie souhaitée et de l'emplacement du siège de l'utilisateur, et d'avoir un accès à l'équipement placé devant le système car la forme en V déplié peut masquer partiellement les équipements placés devant le système.

Selon un mode de réalisation, la couche supérieure comprend un dispositif configuré pour modifier l'ouverture angulaire de la structure en V.

Ainsi, ce dispositif permet un réglage personnalisé en fonction de l'ergonomie souhaitée et de l'emplacement du siège de l'utilisateur, et un accès à l'équipement placé devant le système car la structure en V dépliée peut masquer partiellement les équipements placés devant le système.

Dans un mode de réalisation, la couche supérieure comprend un dispositif configuré pour permettre une rétractation du module à surface plane sensible au toucher.

Un tel dispositif est configuré pour permettre une rétractation du module à surface plane sensible au toucher.

La présence d'un dispositif d'escamotage ou de rétractation permet de réduire l'encombrement du système dans le cockpit. Il permet un réglage personnalisé de la position du système CCD en fonction de l'ergonomie souhaitée et de l'emplacement du siège de l'utilisateur, et un accès à l'équipement placé devant le système car la structure en V dépliée peut masquer partiellement les équipements placés devant le système.

Selon un mode de réalisation, la couche supérieure comprend un dispositif de lumière d'ambiance.

Une lumière d'ambiance connectée ou non au reste du cockpit permet de créer une harmonie que l'on peut ajouter pour améliorer l'esthétique, mieux repérer le pommeau et les boutons en les éclairant.

Selon un mode de réalisation, la platine comprend des dispositifs cache vis de fixation.

Ainsi, le nettoyage du système peut être effectué sans dégrader la disponibilité, ni la maintenabilité.

L'invention sera mieux comprise à l'étude de quelques modes de réalisation décrits à titre d'exemples nullement limitatifs et illustrés par les dessins annexés sur lesquels :
[Fig.1] illustre schématiquement un système d'interaction à distance avec un moyen de pointage d'un système de visualisation de cockpit d'aéronef muni d'IHM, selon l'état de l'art ;
[Fig.2] illustre schématiquement un trackball d'un système de la [Fig.1], selon l'état de l'art ;
[Fig.3] illustre schématiquement un système d'interaction à distance avec un moyen de pointage d'un système de visualisation de cockpit d'aéronef muni d'IHM, selon un aspect de l'invention ;
[Fig.4] illustre schématiquement une vue éclatée du système de la [Fig.3], selon un aspect de l'invention ;
[Fig.5] illustre schématiquement des angles du système de la [Fig.3], selon un aspect de l'invention ;
[Fig.6] illustre schématiquement les intervalles de valeurs possibles des angles de la [Fig.4], selon un aspect de l'invention ;
[Fig.7] illustre schématiquement le pommeau repose main du système de la [Fig.3], selon un aspect de l'invention ;
[Fig.8] illustre schématiquement le pommeau repose main du système de la [Fig.3], selon un aspect de l'invention ;
[Fig.9] illustre schématiquement un mode de réalisation du système de la [Fig.3], permettant une rotation de la couche supérieure, selon un aspect de l'invention ;
[Fig.10] illustre schématiquement un mode de réalisation du système de la [Fig.3], permettant une translation de la couche supérieure, selon un aspect de l'invention ;
[Fig.11] illustre schématiquement un mode de réalisation du système de la [Fig.3], permettant une translation de la couche supérieure, selon un aspect de l'invention ;
[Fig.12] illustre schématiquement un mode de réalisation du système de la [Fig.3], permettant une rotation de la couche supérieure, selon un aspect de l'invention ;
[Fig.13] illustre schématiquement un mode de réalisation du système de la [Fig.3], permettant une modification d'inclinaison de module à surface plane sensible au toucher, selon un aspect de l'invention ;
[Fig.14] illustre schématiquement un mode de réalisation du système de la [Fig.3], permettant une rétractation du module à surface plane sensible au toucher, selon un aspect de l'invention ;
[Fig.15] illustre schématiquement un mode de réalisation du système de la [Fig.3], comprenant un module de rétroéclairage; et
[Fig.16] illustre schématiquement un mode de réalisation dans lequel la platine comprend des dispositifs cache vis de fixation.

Sur l'ensemble des figures, les éléments ayant des références identiques sont similaires.

Dans la présente description, les modes de réalisation décrits ne sont pas limitatifs, et les caractéristiques et fonctions bien connues de l'homme du métier ne sont pas décrites en détails.

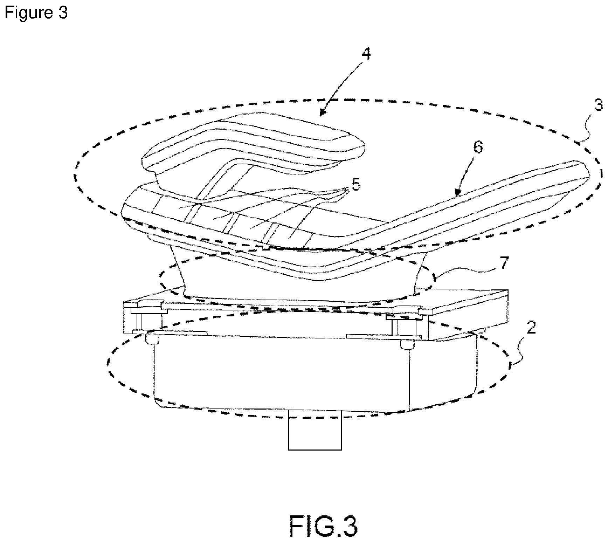

Sur la [Fig.3] est représenté, selon un aspect de l'invention, un système d'interaction à distance avec un moyen de pointage d'un système de visualisation de cockpit d'aéronef muni d'IHM, comprenant trois couches :
- une couche inférieure 2 configurée pour recevoir les connexions filaires d'alimentation électrique et d'échanges de données ;
- une couche supérieure 3 comprenant un pommeau repose main 4, au moins un interacteur physique 5 configurée pour interagir sur un dispositif de pointage sur les IHM du cockpit, et un module 6 à surface plane sensible au toucher configuré pour interagir sur le moyen de pointage sur les IHM du cockpit et disposé dans le prolongement du pommeau repose-main 4 ; et
- une couche intermédiaire 7 configurée pour permettre une modification du positionnement de la couche supérieure 3.

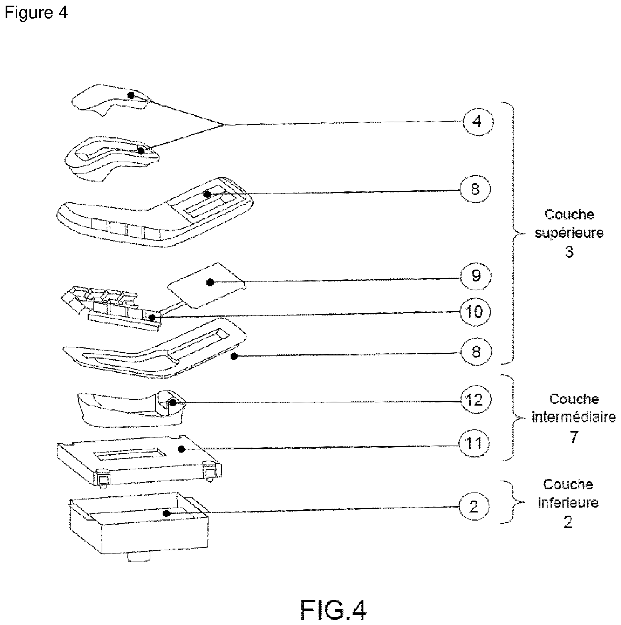

La [Fig.4] représente schématiquement une vue éclatée d'un mode de réalisation d'un système de la [Fig.3.]

La couche supérieure 3 comprend une structure en V 8, par exemple avec un socle inférieur et un boîtier supérieur, permettant un meilleur confort et une parfaite lisibilité de sa zone tactile, pouvant comprendre le module à surface plane sensible au toucher, comme un pavé tactile capacitif multi-contact, ou un écran tactile configuré pour mettre en oeuvre un clavier alpha numérique, ou une surface tactile associée à un capteur infrarouge.

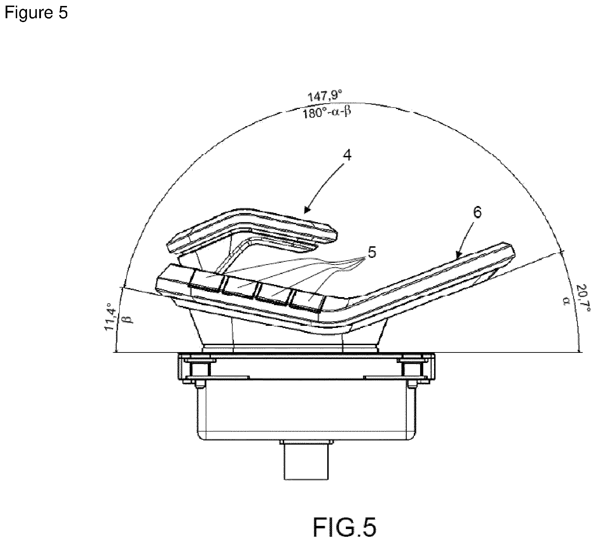

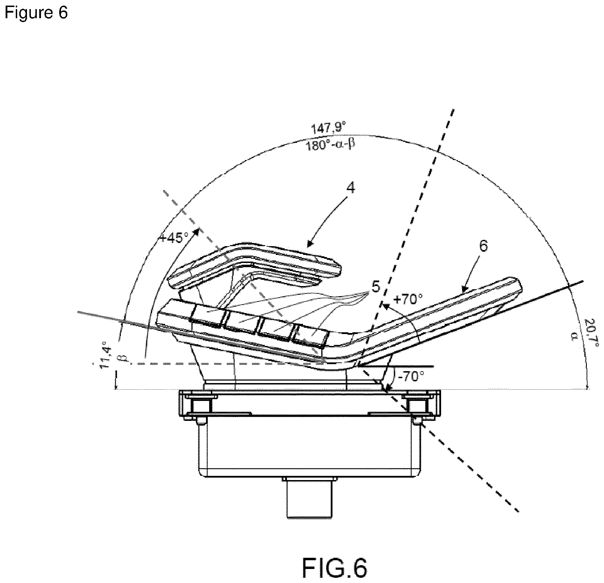

Cette structure en V 8 peut être réalisée en alliage d'aluminium voire en thermoplastique chargé (fibre de verre ou carbone) avec éventuellement une métallisation pour assurer son blindage. Ces matériaux sont préférentiellement choisis car ils permettent d'obtenir une faible masse, une bonne rigidité, des formes complexes voire une personnalisation (couleur, toucher agréable ou ergonomique). Des textures différentes, des bossages ou des cavités peuvent être ajoutés sur la structure en V, autour du module à surface plane sensible au toucher ou des interacteurs physiques, pour permettre de localiser à l'aveugle (en tête haute) la position de ses doigts par rapport au module à surface plane sensible au toucher ou par rapport aux interacteurs physiques (boutons). L'angle d'ouverture ou écart du V est noté 180°- α - β sur les [Fig.5] et [Fig.6].

D'après des évaluations de facteurs humains, pour satisfaire les différentes positions d'installation envisageables sur le piédestal, il est préférable que -70° ≤ α ≤ 70° et valle typiquement 20,7°, comme illustré sur la [Fig.6].

Le pommeau repose main 4, placé à l'arrière de la structure en V 8, permet une accroche ferme et l'utilisation du système en cas de turbulences. Le pommeau 4 peut être réalise en alliage d'aluminium ou en thermoplastique chargé (fibres de verre ou carbone). Ces matériaux sont choisis préférentiellement pour assurer une faible masse, une bonne rigidité, des formes complexes voire une personnalisation (couleur, toucher agréable, agrippement aisé...).

Le pommeau 4 peut être décomposé en deux pièces avec un corps principal et un capot supérieur sur lequel la paume de main est en appui. Le matériau de capot peut être adapté et personnalisé en fonction du client. Ce capot supérieur peut être réalisé en thermoplastique avec un toucher agréable ou un agrippement aisé). Il est donc possible de le réaliser en bois noble comme de l'acajou ou de l'ébène pour les avions d'affaires.

Un module à surface plane 9 sensible au toucher configuré pour interagir sur le moyen de pointage sur les IHM du cockpit, est placé devant le pommeau repose-main 4 avec une inclinaison ergonomique, réglable ou non.

Le module à surface plane 9 sensible au toucher peut comprendre un pavé tactile capacitif multi-contact, ou un écran tactile configuré pour mettre en oeuvre un clavier alpha numérique, ou une surface tactile associée à un capteur infrarouge.

Dans le cas d'un écran tactile, cette disposition permet sa lecture par le pilote (ce qui n'est pas possible avec une structure bulbe de l'état de l'art de la [Fig.1]). En effet, dans ce mode de réalisation, l'angle du V est compris entre 65° et 180° et permet à l'utilisateur de voir le module à surface plane sensible au toucher qui peut ainsi être un écran tactile configuré pour mettre en oeuvre un clavier alpha numérique. Dans le cas d'une structure en forme de bulbe (qui ne correspond pas au mode de réalisation de la [Fig.4]), l'angle angulaire du V est supérieur à 180° et il ne permet pas de voir le module à surface plane sensible au toucher. Dans le cas d'une forme en bulbe, l'intégration d'un écran tactile n'est pas pertinente car il n'est pas vu par l'utilisateur, à moins qu'il se penche vers l'avant de manière inconfortable.

Des boutons 10 placés de chaque côté vers l'arrière du pommeau repose main 4 permettent un accès rapide à des fonctions (exemple : bouton pour communiquer un message aux passagers) et permettent, dans certains cas, d'avoir un niveau de sécurité plus élevé que celui du module à surface plane 9 sensible au toucher. Ces interacteurs physiques disposent préférentiellement de moyens de détection à l'aveugle (bossage ou cavité sur les boutons ou protège-doigts ou rainure entre les boutons) pour permettre à l'utilisateur de les localiser au toucher tout en gardant la tête haute.

La couche intermédiaire 7 comprend une platine 11 (plaque qui bouche l'espace alloué dans le cockpit du porteur et qui dispose d'éléments de fixation compatible au porteur) configurée pour être adaptée à sa position d'installation dans le cockpit et à la fixation requise par l'aéronef. Cette platine 11 adaptable en finitions (couleur et texture équivalentes au reste du cockpit), en dimensions et en moyens de fixation permet d'offrir une gamme de produit flexible et modulaire. Cette platine 11 dispose d'au moins un trou en son centre pour permettre le passage de câbles entre la couche supérieure et la couche inférieure.

La platine11 est adaptée au porteur et à la position d'installation dans le cockpit. Cette platine 11 permet de boucher le trou alloué à l'installation du système d'interaction à distance CCD et de s'adapter à la fixation requise par le porteur (entraxes vis, type de vis, nombre de vis...).

La couche intermédiaire 7 peut également comprendre un adaptateur d'inclinaison 12, disposé sur la platine 11, pour adapter l'inclinaison de la couche supérieure 3. Pour ajuster le produit au porteur et à l'utilisateur, l'angle d'inclinaison β, représenté sur les [Fig.5] et [Fig.6] est compris entre 0° et 45°, et vaut typiquement 11,4°.

Les matériaux utilisés pour la couche intermédiaire 7 et la couche inférieure 2 peuvent être identiques à celui (ou ceux) utilisé(s) pour la structure en V 8.

[Fig.5] représente schématiquement les angles α et β, référencés par rapport à l'horizontale correspondant à la surface supérieure de la platine 11, dont les angles optimisés en fonction des facteurs humains sont respectivement de 20,7° et 11,4°, avec ainsi un écart de la structure en V 8 égal à 180°- α- β, soit 147,9°.

Sur la [Fig.6] sont ajoutés en traits interrompus courts les plages de valeurs possibles des angles α et β qui sont les suivantes : -70° ≤ α ≤ 70° et 0° ≤ β ≤ 45°, en prenant pour référence l'horizontale, et une mesure positive partant de l'horizontale et allant vers la partie supérieure du système.

L'angle Alpha à -70° peut être atteint si les éléments disposés au-dessus de la platine 11 sont avancés par rapport à la platine 11 d'adaptation (pour éviter les interférences mécaniques).

Ces angles sont définis en usine s'il n'y a pas de dispositif d'ajustement et en fonction du porteur (exemple : inclinaison de la console centrale) et des besoins du client.

Si le système CCD dispose d'un dispositif d'ajustement, α et β peuvent être ajustés indépendamment ou non suivant les amplitudes ergonomiques recommandées ci-dessus. Ces amplitudes peuvent être dépassées pour atteindre des positions de repos ou de stockage (voire de transport).

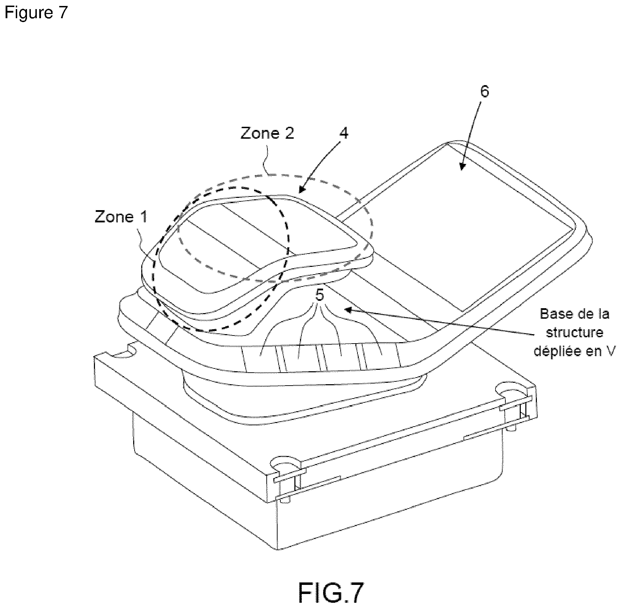

[Fig.7] représente schématiquement un mode de réalisation du pommeau repose main 4, avec deux zones, correspondant à deux positions de la main de l'utilisateur.

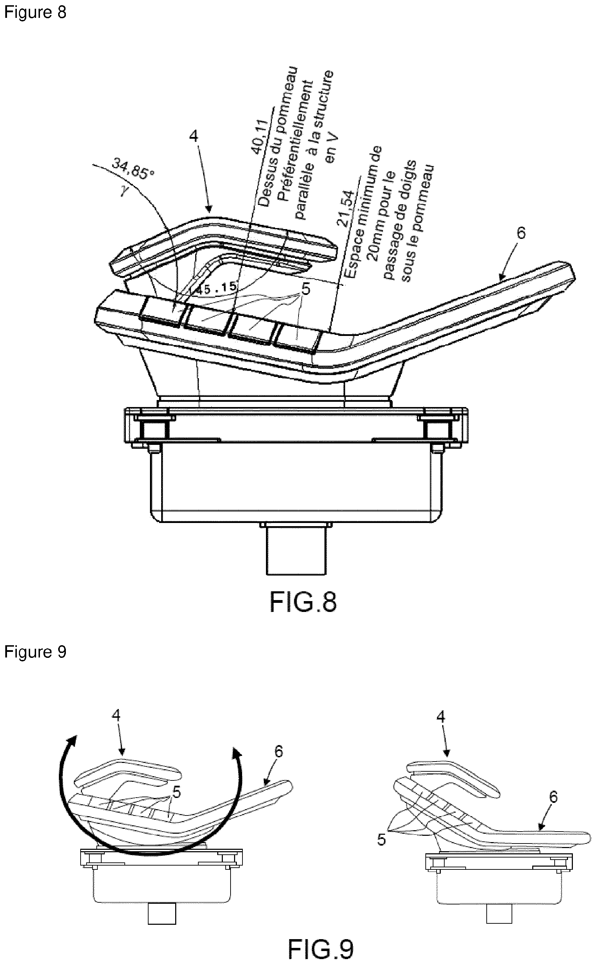

Sur la [Fig.8], une zone arrière Zone1 correspond à une position de repos de l'utilisateur, dans laquelle la main est plutôt à l'arrière du pommeau 4. L'angle γ entre la partie arrière du V inversé, i.e. entre la zone arrière Zone1 et la partie arrière de la structure en V 8, est de 34,85° pour des raisons d'optimisation de l'ergonomie.

Une zone avant Zone2 correspond à une position dans laquelle la main de l'utilisateur est à l'avant pour que les doigts de l'utilisateur puissent interagir avec Le module à surface plane 9 sensible au toucher 9 formant l'avant de la structure en V 8.

L'ouverture du V inversé du pommeau 4, pour des raisons d'ergonomie liées aux facteurs humains vaut 145,15°.

Le pommeau repose main 4 est conçu (forme/taille/fixation) pour être interchangeable et/ou personnalisable afin d'être compatible aux porteurs et aux besoins du client, et pour assurer une préhension ferme par la main en cas de turbulences. A ces fins, un espace libre sous le pommeau 4 est présent (hauteur minimale préférentielle de 20 mm, voir [Fig.8]) pour le passage des doigts. Cet espace libre est aussi une opportunité pour le placement de capteur de présence (type capacitif sous le pommeau) qui permet d'activer des fonctions supplémentaires du système.

Il est possible de mettre des capteurs de présence dans le pommeau repose main 4 (au-dessus et/ou en dessous et/ou sur les côtés du pommeau 4) pour activer des fonctions complémentaires (comme un shift des boutons) ou détecter la présence de main de l'utilisateur (pilote ou copilote selon la détection du pouce à droite ou à gauche).

Il est également possible de mettre des actionneurs haptiques dans le pommeau 4 pour améliorer le ressenti haptique par l'utilisateur (meilleur que celui issu d'un actionneur haptique dans le module 9 à surface plane sensible au toucher). En effet, un retour haptique pourrait apparaître après une tâche de validation. Le retour haptique peut également être utilisé pour indiquer une anomalie ou une erreur d'utilisation.

[Fig.9] illustre schématiquement un mode de réalisation dans lequel la couche intermédiaire 7 comprend un adaptateur de rotation 12 configuré pour effectuer une rotation de la couche supérieure selon un axe horizontal, disposé sur la platine 11, configuré pour adapter l'inclinaison de la couche supérieure 3, permettant une rotation selon un axe horizontal, de la couche supérieure selon un degré de liberté, comme représenté par la double flèche.

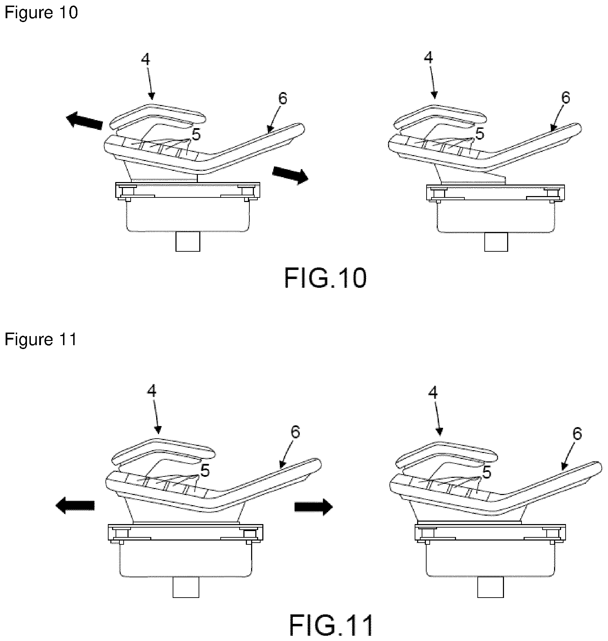

[Fig.10] illustre schématiquement un mode de réalisation dans lequel la couche intermédiaire 7 comprend un adaptateur de translation, par exemple l'adaptateur d'inclinaison 12 qui serait également configuré pour réaliser cette fonction, i.e. configuré pour adapter la translation de la couche supérieure 3 par rapport à la couche intermédiaire 7.

[Fig.11] illustre schématiquement un mode de réalisation dans lequel la couche intermédiaire 7 comprend un adaptateur de translation, par exemple la platine 11 qui serait également configurée pour réaliser cette fonction, i.e. configurée pour adapter la translation de la couche intermédiaire 7 par rapport à la couche inférieure 2.

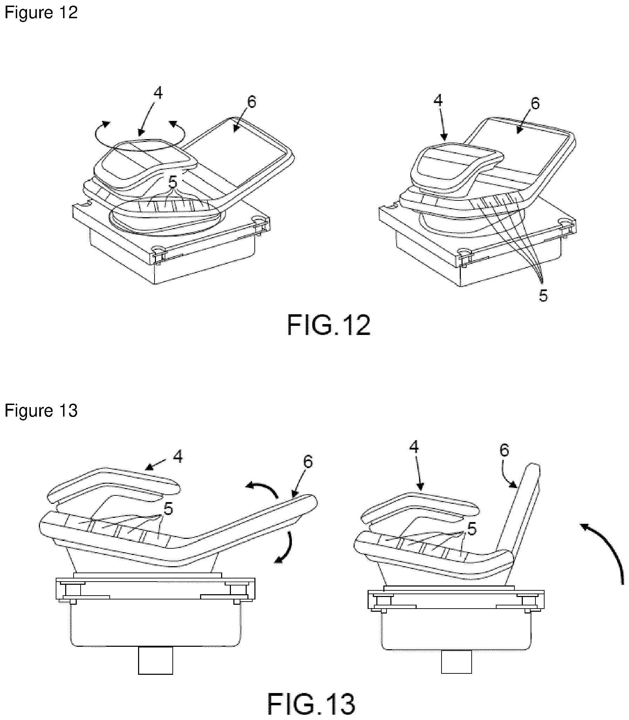

[Fig.12] illustre schématiquement un mode de réalisation dans lequel la couche intermédiaire 7 comprend un adaptateur de rotation, configuré pour effectuer une rotation des éléments disposés au-dessus de la platine, de manière solidaire, selon un axe vertical.

Ces adaptateurs de rotation et de translation permettent de réaliser un réglage personnalisé de la position du système CCD en fonction de l'ergonomie souhaitée et de l'emplacement du siège de l'utilisateur, et d'avoir un accès à l'équipement placé devant le système car la forme en V déplié peut masquer partiellement les équipements placés devant le système.

Ces adaptateurs de rotation et de translation ont l'avantage de maintenir la couche supérieure 3 constante et totalement fonctionnelle. En effet, la position de la main entre le pommeau 4 et la zone tactile 9 ne change pas quel que soit le réglage de ces adaptateurs.

Dans le mode de réalisation de la [Fig.9], la rotation donne un meilleur accès à l'appareil placé à l'avant du système CCD. La rotation peut être réalisée par un guidage ou un rail à éléments roulants, ou par un guidage à friction.

Dans les modes de réalisation des [Fig.10] et [Fig.11], la translation horizontale ou oblique peut être réalisée par un guidage ou un rail à éléments roulants ou un guidage à friction.

Dans le mode de réalisation de la [Fig.12], la rotation peut être réalisée par un roulement ou par un palier lisse à friction.

Dans les modes de réalisation des [Fig.9], [Fig.10], [Fig.11] et [Fig.12] la translation ou la rotation peut être associée à :
- un dispositif de friction ou de précontrainte réglable. Cette friction peut être produite par un patin qui frotte sur le rail et dont la précontrainte serait ajustée via une vis et un ressort. Un tel ressort permet de maintenir le réglage et la friction malgré l'usure du patin ; et/ou
- un dispositif d'indexation en position. Les positions indexées sont au minimum les positions extrêmes du système CCD et éventuellement des positions intermédiaires. L'indexation peut être réalisée :
   ∘ par un dispositif mécanique comprenant au moins une bille précontrainte par un ressort sur une partie du rail, appelé chemin de bille. Ce dernier dispose de poches ou cavités dans lesquelles la bille se loge pour atteindre une position stable d'indexation. L'effort pour sortir de cette position stable d'indexation dépend des dimensions de la bille, des cavités et du ressort ; ou
   ∘ par un système magnétique comprenant d'au moins un aimant fixe placé devant une partie mobile solidaire de la couche supérieure. Cette partie mobile dispose de dents fabriquées dans un matériau ferromagnétique ou d'aimants qui génèrent des positions stables d'indexation lorsqu'ils sont placés devant l'aimant fixe. Ce système d'indexation magnétique n'ajoute pas de friction supplémentaire en dehors des positions d'indexation ; et/ou
- un système de verrouillage de position qui revient au système de friction de plus forte intensité. Le système de verrouillage peut être commandé avec un mécanisme mû par un levier sous le pommeau ou un électro mécanisme (actionneur ou électroaimant) actionné par un bouton ; et/ou
- un système de rappel par ressort pour forcer l'emplacement rétracté lorsque le système CCD se situe entre des positions indexées.

[Fig.13] illustre schématiquement un mode de réalisation dans lequel la couche supérieure comprend un dispositif configuré pour modifier l'ouverture angulaire de la structure en V.

Ainsi, la couche supérieure 3 est composée de deux parties. La première partie composée du pommeau repose main 4 et des boutons 5 est fixe et solidaire des autres couches du système CCD. La seconde partie composée du module 6 à surface plane sensible au toucher peut pivoter par rapport à la première partie suivant un axe horizontal. Cette liaison pivot peut être réalisée grâce à des roulements ou des paliers lisses pour former une charnière. L'inclinaison de la zone tactile 6 permet de donner un meilleur accès à l'appareil placé à l'avant du système CCD. Ce mouvement donne à l'utilisateur la possibilité de choisir l'inclinaison la plus confortable de la zone tactile 6. L'inclinaison de la zone tactile 6 peut être réalisée par un dispositif de friction réglable et/ou un système d'indexation et/ou un système de verrouillage d'emplacement et/ou un système de rappel par ressort (équivalents aux systèmes détaillés pour les modes de réalisation des [FIG.9], [FIG.10], [FIG.11], et [FIG.12]).

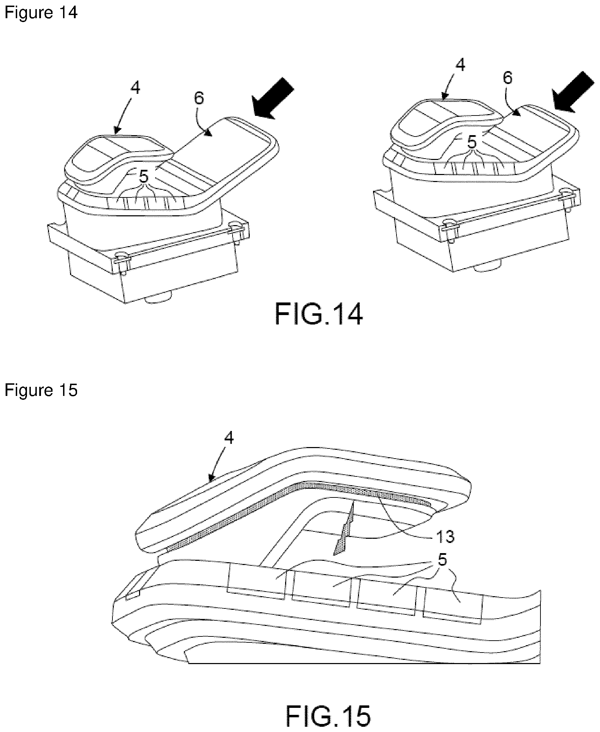

[Fig.14] illustre schématiquement un mode de réalisation dans lequel la couche supérieure comprend un dispositif configuré pour permettre une rétractation ou un escamotage du module à surface plane sensible au toucher 9.

Ainsi, il est possible d'obtenir un réglage personnalisé de la position du système CCD en fonction de l'ergonomie souhaitée et de l'emplacement du siège de l'utilisateur, et un accès à l'équipement placé devant le système car la forme en V déplié peut masquer partiellement les équipements placés devant le système.

Dans le mode de réalisation de la [Fig.14], la couche supérieure 3 est composée de deux parties. La première partie comprenant le pommeau 4 et des boutons 5 est fixe et solidaire des autres couches du système CCD. La seconde partie comprenant le module 6 à surface plane sensible au toucher peut se translater par rapport à la première partie suivant un axe oblique afin que la seconde partie puisse pénétrer dans la première partie. Cette translation peut être réalisée par un guidage à éléments roulant ou un guidage à friction. La translation de la zone tactile 6 permet de donner un meilleur accès à l'appareil placé devant le système CCD. La translation du pavé tactile 6 peut comprendre un dispositif de friction réglable et/ou un dispositif d'indexation et/ou un dispositif de verrouillage d'emplacement et/ou un dispositif de rappel par ressort (équivalents aux dispositifs détaillés pour les modes de réalisation des [FIG.9], [FIG.10], [FIG.11], et [FIG.12]). En position rétractée, la zone tactile 6 peut être utilisée en mode dégradé (fonction essentielle). Le déploiement de la zone tactile 6 vers la position d'utilisation normale peut être activé grâce au pavé tactile 6 et/ou un levier (par exemple: déverrouillage du mécanisme d'indexation et extraction avec ressort).

[Fig.15] illustre schématiquement un mode de réalisation dans lequel la couche supérieure 3 comprend un dispositif de lumière d'ambiance 13.

La présence d'une lumière d'ambiance, connectée ou non, au reste du cockpit permet de créer une harmonie que l'on peut ajouter pour améliorer l'esthétique, mieux repérer le pommeau voire éclairer les boutons. En effet, le repérage lumineux en cas d'urgence ou de turbulence peut représenter un atout du point de vue de la sécurité. Cet éclairage peut être connecté et synchronisé avec le reste du cockpit. Dans ce cas, il peut changer de couleur en fonction du contexte durant le vol (exemple : clignotement rouge en situation d'urgence). Par ailleurs, cet éclairage permet d'éclairer les boutons latéraux et un bouton présent à l'arrière. Avec cette option, le rétro-éclairage interne des boutons peut être économisé (i.e. supprimé) au profit d'un traitement ou d'un matériau réfléchissant, photoluminescent ou phosphorescent.

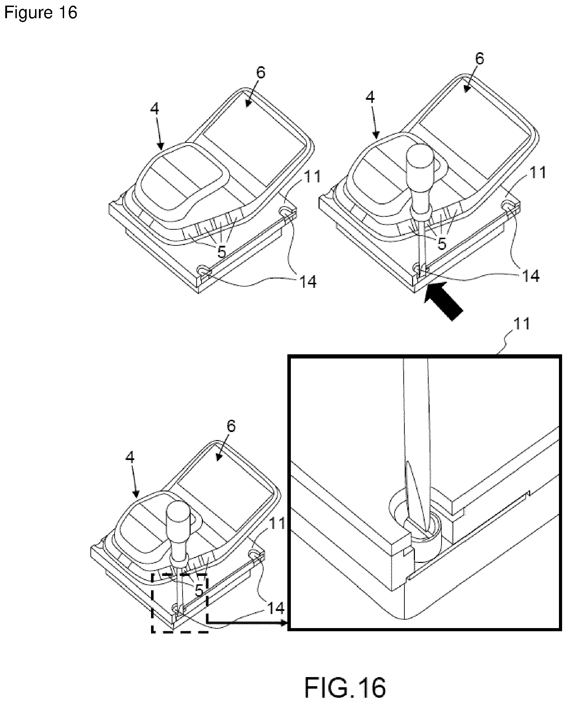

[Fig.16] illustre schématiquement un mode de réalisation dans lequel la platine 11 comprend des dispositifs 14 cache vis de fixation. Les dispositifs 14 cache vis de fixation améliorent la qualité perçue et représentent un avantage du point de vue sanitaire. Le repositionnement du cache, comme une plaque ou un clapet, au-dessus d'une vis de fixation peut se faire grâce à un ressort ou un aimant permanent de rappel. Le mouvement du cache peut être une translation et/ou une rotation associée éventuellement à un louvoiement. Ce système améliore le nettoyage du système sans dégrader la disponibilité, ni la maintenabilité. En effet, l'accès aux vis de fixation ne nécessite pas d'outil spécifique, ni d'outil supplémentaire.

## Revendications

1. Système d'interaction à distance avec un moyen de pointage d'un système de visualisation de cockpit d'aéronef muni d'IHM, comprenant trois couches :
- une couche inférieure (2) configurée pour recevoir les connexions filaires d'alimentation électrique et d'échanges de données ;
- une couche supérieure (3) comprenant un pommeau (4) repose main, au moins un interacteur physique (5) configuré pour interagir sur le moyen de pointage sur les IHM du cockpit, et un module (6) à surface plane sensible au toucher configuré pour interagir sur le dispositif de pointage sur les IHM du cockpit et disposé dans le prolongement du pommeau (4) repose-main ; et
- une couche intermédiaire (7) configurée pour permettre une modification du positionnement de la couche supérieure (3).

2. Système selon la revendication 1, dans lequel le module (6) à surface plane sensible au toucher configuré pour interagir sur le dispositif de pointage sur les IHM du cockpit comprend un pavé tactile capacitif multi-contact, ou un écran tactile configuré pour mettre en oeuvre un clavier alpha numérique, ou une surface tactile associée à un capteur infrarouge.

3. Système selon l'une des revendications précédentes, dans lequel la couche supérieure (3) a une structure en V (8) et le pommeau (4) repose main en V inversé, dans lequel le V a une ouverture angulaire comprise entre 65° et 250°.

4. Système selon la revendication 3 , dans lequel le V inversé a une ouverture angulaire comprise entre 110° et 160°.

5. Système selon la revendication 4, dans lequel le V inversé a une ouverture angulaire de 145°.

6. Système selon l'une des revendications 3 à 5, dans lequel la partie avant du pommeau (4) repose main en V inversé est parallèle à la partie arrière de la structure en V (8).

7. Système selon une des revendications 3 à 6, dans lequel l'écart entre la surface supérieure de la partie arrière de la structure en V et la surface inférieure de la partie avant du pommeau repose main en V inversé est supérieur ou égal à 20 mm.

8. Système selon l'une des revendications précédentes, dans lequel la couche intermédiaire (7) comprend une platine (11) configurée pour être adaptée à sa position d'installation dans le cockpit et à la fixation requise par l'aéronef.

9. Système selon l'une des revendications précédentes, dans lequel la couche intermédiaire (7) comprend un adaptateur de rotation (12), configuré pour effectuer une rotation de la couche supérieure (3) selon un axe horizontal, par exemple configuré pour s'incliner jusqu'à 45° par rapport à l'horizontale.

10. Système selon l'une des revendications précédentes, dans lequel la couche intermédiaire (7) comprend un adaptateur de translation, configuré pour effectuer une translation de la couche supérieure (3) par rapport à la couche intermédiaire (7).

11. Système selon la revendication 8 ou l'une des revendication 9 ou 10 en combinaison avec la revendication 8, dans lequel la couche intermédiaire (7) comprend un adaptateur de rotation, configuré pour effectuer une rotation des éléments disposés au-dessus de la platine (11), de manière solidaire, selon un axe vertical.

12. Système selon la revendication 3 ou l'une des revendications 4 à 11 en combinaison avec la revendication 3 , dans lequel la couche supérieure (3) comprend un dispositif configuré pour modifier l'ouverture angulaire de la structure en V.

13. Système selon l'une des revendications précédentes, dans lequel la couche supérieure (3) comprend un dispositif configuré pour permettre une rétractation du module (6) à surface plane sensible au toucher.

14. Système selon l'une des revendications précédentes, dans lequel la couche supérieure (3) comprend un dispositif (13) de lumière d'ambiance.

15. Système selon la revendication 8 ou l'une des revendications 9 à 14 en combinaison avec la revendication 8, dans lequel la platine comprend des dispositifs (14) cache vis de fixation.

## Patentansprüche

1. System zur Ferninteraktion mit einem Zeigemittel eines mit HMIs ausgestatteten Luftfahrzeugcockpit-Anzeigesystems, das drei Schichten umfasst:
- eine untere Schicht (2), die zum Aufnehmen der verdrahteten Stromversorgungs- und Datenaustauschverbindungen konfiguriert ist;
- eine obere Schicht (3), die einen Handauflageknauf (4), mindestens ein physisches Interaktionsmittel (5), das zum Interagieren auf dem Zeigemittel zum Zeigen auf die HMIs des Cockpits konfiguriert ist, und ein Modul (6) mit einer berührungsempfindlichen flachen Oberfläche umfasst, das zum Interagieren auf der Zeigevorrichtung zum Zeigen auf die HMIs des Cockpits konfiguriert und in der Verlängerung des Handauflageknaufs (4) angeordnet ist; und
- eine Zwischenschicht (7), die zum Zulassen einer Änderung der Position der oberen Schicht (3) konfiguriert ist.

2. System nach Anspruch 1, wobei das zum Interagieren auf der Zeigevorrichtung zum Zeigen auf die HMIs des Cockpits konfigurierte Modul (6) mit berührungsempfindlicher flacher Oberfläche ein kapazitives Multikontakt-Touchpad oder einen zum Implementieren einer alphanumerischen Tastatur konfigurierten Touchscreen oder eine mit einem Infrarotsensor assoziierte Berührungsfläche umfasst.

3. System nach einem der vorhergehenden Ansprüche, wobei die obere Schicht (3) eine V-förmige Struktur (8) und der Handauflageknauf (4) eine umgekehrte V-förmige Struktur aufweist, wobei das V eine Winkelöffnung zwischen 65° und 250° aufweist.

4. System nach Anspruch 3, wobei das umgekehrte V eine Winkelöffnung zwischen 110° und 160° aufweist.

5. System nach Anspruch 4, wobei das umgekehrte V eine Winkelöffnung von 145° aufweist.

6. System nach einem der Ansprüche 3 bis 5, wobei der vordere Teil des Handauflageknaufs (4) in Form eines umgekehrten V parallel zum hinteren Teil der V-förmigen Struktur (8) verläuft.

7. System nach einem der Ansprüche 3 bis 6, wobei der Abstand zwischen der Oberseite des hinteren Teils der V-förmigen Struktur und der Unterseite des vorderen Teils des umgekehrten V-förmigen Handauflageknaufs größer als oder gleich 20 mm ist.

8. System nach einem der vorhergehenden Ansprüche, wobei die Zwischenschicht (7) eine Platine (11) umfasst, die zum Anpassen an ihre Einbauposition im Cockpit und an die von dem Luftfahrzeug geforderte Befestigung konfiguriert ist.

9. System nach einem der vorhergehenden Ansprüche, wobei die Zwischenschicht (7) einen Drehadapter (12) umfasst, der zum Bewirken einer Drehung der oberen Schicht (3) um eine horizontale Achse konfiguriert ist, beispielsweise zum Kippen bis zu 45° in Bezug auf die Horizontale konfiguriert ist.

10. System nach einem der vorhergehenden Ansprüche, wobei die Zwischenschicht (7) einen Translationsadapter umfasst, der zum Bewirken einer translationalen Bewegung der oberen Schicht (3) in Bezug auf die Zwischenschicht (7) konfiguriert ist.

11. System nach Anspruch 8 oder einem der Ansprüche 9 oder 10 in Kombination mit Anspruch 8, wobei die Zwischenschicht (7) einen Drehadapter umfasst, der zum Bewirken einer Drehung der über der Platine (11) angeordneten Elemente einstückig um eine vertikale Achse konfiguriert ist.

12. System nach Anspruch 3 oder einem der Ansprüche 4 bis 11 in Kombination mit Anspruch 3, wobei die obere Schicht (3) eine Vorrichtung umfasst, die zum Ändern der Winkelöffnung der V-förmigen Struktur konfiguriert ist.

13. System nach einem der vorhergehenden Ansprüche, wobei die obere Schicht (3) eine Vorrichtung umfasst, die zum Zulassen des Zurückziehens des Moduls (6) mit berührungsempfindlicher flacher Oberfläche konfiguriert ist.

14. System nach einem der vorhergehenden Ansprüche, wobei die obere Schicht (3) eine Umgebungslichtvorrichtung (13) umfasst.

15. System nach Anspruch 8 oder einem der Ansprüche 9 bis 14 in Kombination mit Anspruch 8, wobei die Platine Befestigungsschrauben-Abdeckvorrichtungen (14) umfasst.

## Claims

1. A system for remote interaction with a pointing means of an aircraft cockpit display system equipped with HMIs, comprising three layers:
- a lower layer (2) configured to receive the wired electric power supply and data exchange connections;
- an upper layer (3) comprising a hand-rest knob (4), at least one physical interaction means (5) configured to interact on the pointing means for pointing at the HMIs of the cockpit, and a module (6) with a touch-sensitive flat surface configured to interact on the pointing device for pointing at the HMIs of the cockpit and arranged in the extension of the hand-rest knob (4); and
- an intermediate layer (7) configured to make it possible to modify the position of the upper layer (3).

2. The system according to claim 1, wherein the module (6) with a touch-sensitive flat surface configured to interact on the pointing device for pointing at the HMIs of the cockpit comprises a multi-contact capacitive touch pad, or a touch screen configured so as to implement an alphanumeric keypad, or a touch surface associated with an infrared sensor.

3. The system according to one of the preceding claims, wherein the upper layer (3) has a V-shaped structure (8) and the hand-rest knob (4) has an inverted-V-shaped structure, wherein the V has an angle of aperture of between 65° and 250°.

4. The system according to claim 3, wherein the inverted V has an angle of aperture of between 110° and 160°.

5. The system according to claim 4, wherein the inverted V has an angle of aperture of 145°.

6. The system according to one of claims 3 to 5, wherein the front part of the inverted-V-shaped hand-rest knob (4) is parallel to the rear part of the V-shaped structure (8).

7. The system according to one of claims 3 to 6, wherein the gap between the upper surface of the rear part of the V-shaped structure and the lower surface of the front part of the inverted-V-shaped hand-rest knob is greater than or equal to 20 mm.

8. The system according to one of the preceding claims, wherein the intermediate layer (7) comprises a baseplate (11) configured to be adapted to its installation position in the cockpit and to the fastening required by the aircraft.

9. The system according to one of the preceding claims, wherein the intermediate layer (7) comprises a rotary adaptor (12), configured to rotate the upper layer (3) about a horizontal axis, for example configured to tilt up to 45° with respect to the horizontal.

10. The system according to one of the preceding claims, wherein the intermediate layer (7) comprises a translational adaptor, configured to move the upper layer (3) in translation with respect to the intermediate layer (7).

11. The system according to claim 8 or one of claims 9 or 10 in combination with claim 8, wherein the intermediate layer (7) comprises a rotary adaptor, configured to rotate the elements arranged above the baseplate (11) jointly about a vertical axis.

12. The system according to claim 3 or one of claims 4 to 11 in combination with claim 3, wherein the upper layer (3) comprises a device configured to modify the angle of aperture of the V-shaped structure.

13. The system according to one of the preceding claims, wherein the upper layer (3) comprises a device configured to make it possible to retract the module (6) with a touch-sensitive flat surface.

14. The system according to one of the preceding claims, wherein the upper layer (3) comprises an ambient light device (13).

15. The system according to claim 8 or one of claims 9 to 14 in combination with claim 8, wherein the baseplate comprises fastening screw cover devices (14).
